# EUROPÄISCHE PATENTSCHRIFT

(11) **EP 3 750 731 B1**
(45) Veröffentlichungstag und Bekanntmachung des Hinweises auf die Patenterteilung: **05.07.2023**
(21) Anmeldenummer: 20172925.8
(22) Anmeldetag: 05.05.2020
(51) Int. Cl.: B60K 1/00, B60K 15/05, B60K 15/04, H01R 13/453

(54) **LADEBUCHSE**
CHARGING SOCKET
PRISE DE CHARGE

(30) Priorität: 11.06.2019 DE 102019115862
(43) Veröffentlichungstag der Anmeldung: 16.12.2020
(73) Patentinhaber: Jungheinrich Aktiengesellschaft, 22047 Hamburg (DE)
(72) Erfinder: Niebuhr, Michael, 22941 Bargteheide (DE)
(74) Vertreter: Hauck Patentanwaltspartnerschaft mbB

(56) Entgegenhaltungen:
- EP-A2- 1 139 128
- WO-A1-2014/114374
- DE-A1-102018 110 505
- DE-B3-102011 082 355
- DE-C- 495 191
- JP-A- H 118 005
- JP-A- 2002 343 494
- US-A- 4 176 897
- US-A1- 2014 094 045
- US-A1- 2016 104 962

## Beschreibung

Die vorliegende Erfindung betrifft eine Ladebuchse für einen elektrischen Steckverbinder an einem Fahrzeug, insbesondere an einem Flurförderzeug. Bei elektrisch betriebenen Fahrzeugen besteht die Möglichkeit, diese extern nachzuladen, ohne dass die Batterie vom Fahrzeug entfernt werden muss. Hierzu ist eine am Fahrzeug montierte Ladebuchse vorgesehen, die beispielsweise einen am Fahrzeug mitgeführten elektrischen Steckverbinder besitzt. Über die Ladebuchse wird mit einem externen Ladestecker eine elektrisch leitende Verbindung zu dem Steckverbinder des Fahrzeugs hergestellt, um beispielsweise elektrische Leistung und Daten mit diesem austauschen zu können.

Bei Fahrzeugen, insbesondere bei Flurförderzeugen, die auch rauen Arbeits- und Einsatzbedingungen ausgesetzt sind besteht die Notwendigkeit, den elektrischen Steckverbinder in der Ladebuchse zu schützen. Hierzu sind eine Reihe von Konzepten bekannt. Die Ladebuchse kann hinter einer aufklappbaren Tür angeordnet sein, die durch Betätigung eines Öffnungsmechanismus geöffnet werden kann. Nachteilig an dieser Lösung ist, dass Schwenkraum für die aufklappbare Tür vorgesehen sein muss.

Alternativ sind Ladebuchsen bekannt, die eine oder mehrere kleine federbelastete und nach innen öffnende Klappen aufweisen. Der Batteriestecker wird mit etwas Kraft durch die entstehende Öffnung gedrückt. Nachteilig an dieser Lösung ist, dass die federbelasteten Klappen möglicherweise bei der Reinigung mit einem Druckluft- oder Wasserstrahl öffnen und die elektrischen Kontakte in der Ladebuchse nicht ausreichend geschützt sind.

Den Nachteil überwindet eine Ladebuchse mit einer federbelasteten Klappe, die nach außen aufgeklappt werden kann. Hierdurch wird allerdings der Zugang zur Ladebuchse und ihren elektrischen Kontakten am Fahrzeug erschwert.

Aus DE 10 2015 109 081 A1 ist ein Flurförderzeug mit einer Ladesteckerverbindung bekannt geworden, bei der mindestens eine Ladeklappe vorgesehen ist, bei der die mindestens eine Ladeklappe nach innen gedrückt wird, wenn der Ladestecker in die Ladebuchse eingeführt wird.

Aus DE 2011 006 473 A1 ist eine Ladeeinrichtung mit Lamellenverschluss für ein Elektrofahrzeug bekannt geworden. Hierbei ist auch eine Ausgestaltung vorgesehen, bei der vorgespannte Lamellen vorgesehen sind, die um zwei parallel zueinander angeordnete Achsen verschwenkbar sind. Beim Einführen eines Ladesteckers schwenken diese nach innen auf und verschwenken bei Entfernen des Ladesteckers in ihre angeschlossene Position.

Aus DE 10 2011 082 355 B3 ist eine Steckdose für ein Fahrzeug bekannt geworden, die eine Öffnung zur Aufnahme eines Steckers und einen Stromkontaktbereich für den Stecker aufweist, wobei die Steckdose über einen Deckel verschließbar ist. Der Deckel besteht aus einzelnen Lamellen, wobei eine Bewegung des Deckels von seiner Schließposition in eine Öffnungsposition nur zugelassen wird, wenn alle Lamellen in eine vordefinierte Position bewegt werden.

Aus DE 10 2018 110 505 A ist einen Ladeanschluss mit eine Türbaugruppe bekannt. Der Ladeanschluss ist durch eine erste Tür und eine zweite Tür verdeckt. Die Türen sind schwenkbar in jeweils einem Ringsegment gelagert. Die Türen schwenken in Richtung P auf. Die Türen besitzen auf ihrer zum Ladeanschluss weisenden Seite jeweils eine Verlängerung, die jeweils eine Verriegelung betätigen.

Der Erfindung liegt die Aufgabe zu Grunde eine Ladebuchse bereitzustellen, die bei möglichst gutem Bedienungskomfort einen wirksamen Schutz gegen ein unbeabsichtigtes Öffnen der Ladeklappe bietet.

Erfindungsgemäß wird die Aufgabe durch eine Ladebuchse mit den Merkmalen aus Anspruch 1 gelöst. Vorteilhafte Ausgestaltungen bilden die Gegenstände der Unteransprüche.

Erfindungsgemäß ist eine Ladebuchse mit einem elektrischen Steckverbinder für einen Ladestecker vorgesehen. Die Ladebuchse kann hierbei einteilig mit dem elektrischen Steckverbinder ausgebildet sein oder der elektrische Steckverbinder ist an der Ladebuchse montiert. Zur besseren Unterscheidung wird nachfolgend ein elektrischer Steckverbinder als der fahrzeugseitige Teil an der elektrischen Steckverbindung bezeichnet, während für extern von einem Ladestecker gesprochen wird. Die erfindungsgemäße Buchse besitzt einen Rahmen mit einer Öffnung zu dem elektrischen Steckverbinder und ein Paar von schwenkbar an parallel zueinander verlaufenden Schwenkachsen angeordneten Klappen. Mindestens ein Federelement spannt die Klappen in eine geschlossene Position vor. Bei der erfindungsgemäßen Ladebuchse öffnen die Klappen nach innen durch Einführen des Ladesteckers in die Öffnung in dem Rahmen der Ladebuchse. Erfindungsgemäß ist vorgesehen, dass jede der Klappen eine Grundwand und eine Rückwand aufweist. Im geschlossenen Zustand sind die Rückwände erfindungsgemäß gegenüber einer gedachten Ebene der Öffnung versetzt. Der Versatz der Rückwand erfolgt dabei in Richtung des elektrischen Steckverbinders, also in Richtung Fahrzeuginnenraum bei einer in einem Fahrzeug montierten Ladebuchse. Ein auf die Ladebuchse gerichteter Druckluft- oder Wasserstrahl trifft, wenn er auf die Öffnung der Ladebuchse gerichtet ist im Wesentlichen auf die zurückversetzten Rückwände der Klappen, wodurch ein die Klappe öffnendes Moment vermieden oder deutlich reduziert werden kann. Als besonders vorteilhaft hat es sich herausgestellt, wenn der Versatz (V) der Rückwand 0,5 bis 10 cm und besonders bevorzugt 1 bis 6 cm beträgt. Ebenso hat es sich als zweckmäßig herausgestellt einen Versatz (V) für die Rückwand auf eine Öffnungshöhe (H) zu beziehen, wobei bevorzugt 0,1 H ≤ V ≤ 2 H und insbesondere 0,4 H ≤ V ≤ 1 H gewählt werden kann. Anders als bei Klappen aus dem Stand der Technik ist die erfindungsgemäße Klappe mit zwei Wandabschnitten aufgebaut, der Grundwand und der jeweiligen Rückwand. Angreifende Kräfte greifen daher hauptsächlich an der Rückwand und nur teilweise an der Grundwand an. Durch die Zwischenschaltung der Grundwand entsteht der Versatz der Rückwände und das öffnende Drehmoment von der Rückwand auf die Klappe wird insgesamt reduziert.

Bevorzugt ist ein parallel zur Schenkachs verlaufender Knick zwischen den beiden Wandabschnitten vorgesehen. Die Orientierung des Knicks parallel zur Schwenkachse stellt sicher, dass im Wesentlichen die versetzt angeordnete Rückwand die Öffnung verschließt. Bevorzugt schließen die Grundwand und ihre jeweilige Rückwand einen rechten oder einen stumpfen Winkel miteinander ein, hierdurch wird die Bildung einer "Tasche" oder einer Aufnahme zwischen Grund- und Rückwand vermieden, in der sich Wasser oder Druckluft sammeln könnte.

In einer bevorzugten Weiterbildung der erfindungsgemäßen Ladebuchse ist das mindestens eine Federelement an beiden Klappen angebracht und spannt diese in die geschlossene Stellung vor. Durch die Anbringung des Federelements an den beiden Klappen wird Bauraum für die Ladebuchse im Fahrzeuginnenraum gespart. Das mindestens eine Federelement kann platzsparend an den beiden Klappen angeordnet sein und diese gegeneinander in die geschlossene Position vorspannen.

Bevorzugt verläuft das mindestens eine Federelement senkrecht zur Schwenkachse, wobei weiter bevorzugt die Rückwand im Wesentlichen parallel zu dem mindestens einem Federelement verläuft. Durch die Anordnung des Federelements senkrecht zur Schwenkachse wird einem Aufschwenken der beiden Klappen eine maximale Kraft des Federelements entgegengesetzt.

In einer weiter bevorzugten Ausgestaltung weist mindestens eine der Grundwände eine oder mehrere Durchbrechungen auf, wodurch beispielsweise Wasser oder Druckluft, die durch die Öffnung im Rahmen in einen von Grund- und Rückwand gebildeten Raum der Ladebuchse eingetreten ist, entweichen kann. Die elektrische Steckverbindung ist hierbei durch die Rückwand geschützt.

In einer besonders bevorzugten Ausgestaltung der erfindungsgemäßen Ladebuchse ist jede Klappe mit mindestens einem Steg ausgestattet, der sich von der Schwenkachse ausgehend in Richtung Rückwand erstreckt, wobei ein Abstand zwischen den gegenüberliegenden Stegen beider Klappen sich hin zur Rückwand verjüngt. Durch den sich verjüngenden Abstand werden die Klappen durch einen eingeführten Ladestecker geöffnet. Die Stege selbst erstrecken sich scheibenförmig in Richtung von der Schwenkachse zur Rückwand, so dass ein angreifender Wasser- oder Druckluftstrahl keine Angriffsfläche an dem Steg besitzt.

In einer bevorzugten Ausgestaltung ist der Rahmen der Ladebuchse mit einer rechteckigen Öffnung ausgestattet, die durch die beiden Klappen verschlossen wird. Die rechteckige Öffnung ist bevorzugt mindestens doppelt so lang in einer ersten Richtung wie in einer zweiten Richtung. Die Schwenkachsen erstrecken sich jeweils bevorzugt in der ersten Richtung in der Öffnung, also in der längeren Richtung.

In einer bevorzugten weiteren Ausgestaltung der Erfindung ist ein Verriegelungsmechanismus für die beiden Klappen vorgesehen. Der Verriegelungsmechanismus besitzt mindestens einen auch in einer geschlossenen Position der beiden Klappen zugänglichen Entriegelungshebel. Die Klappen sind in der geschlossenen Position verriegelt und werden durch eine Betätigung eines Entriegelungshebels entriegelt. Der Entriegelungshebel oder die Entriegelungshebel werden bevorzugt betätigt, indem der Ladestecker in die Öffnung im Rahmen eingeführt wird und gegen den Entriegelungshebel drückt. Wird der Entriegelungshebel betätigt, so verschwenkt dieser und dreht mindestens einen Sperrhaken aus einer die Klappen sperrenden Position. Der mindestens eine Sperrhaken schwenkt gegen eine Federkraft auf und gibt die Klappen für ein Aufschwenken frei.

Drei bevorzugte Ausführungsbeispiele der erfindungsgemäßen Ladebuchse werden anliegend näher beschrieben. Es zeigen:
- Figur 1: eine perspektivische Ansicht auf den Rahmen mit geschlossenen Klappen einer ersten Ausführungsform,
- Figur 2a: eine perspektivische Ansicht aus Figur 1 bei einem ganz oder teilweise gesteckten Ladestecker,
- Fig. 2b: eine perspektivische Ansicht bei geschlossenen Klappen und einem Spritzschutz,
- Figur 3: die Ladebuchse aus Figur 1 zusammen mit einem noch nicht vollständig gesteckten Ladestecker und
- Figur 4: eine perspektivische Ansicht einer zweiten Ausführungsform in einer perspektivischen Ansicht bei teilweise geöffneten Klappen,
- Figur 5: die Ausführungsform aus Figur 4 bei geschlosssenen Klappen,
- Figur 6: eine dritte Ausführungsform mit einem Verriegelungsmechanismus und
- Figur 7: die dritte Ausführungsform aus Figur 6 in einer geschlossenen Position der Klappen.

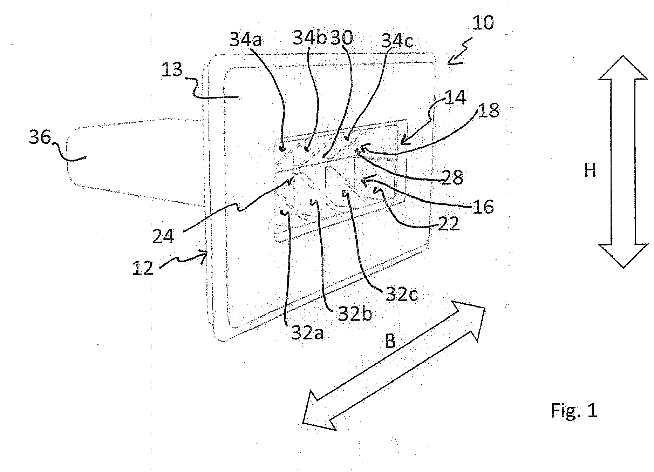

Figur 1 zeigt eine Ladebuchse in einer perspektivischen Ansicht. Zu einer besseren Übersicht ist die Ladebuchse in einem nicht am Fahrzeug montierten Zustand dargestellt. Die Ladebuchse 10 weist einen Montagerahmen 12 auf, der eine im Wesentlichen rechteckige Form mit abgerundeten Ecken besitzt. Der Montagerahmen 12 besitzt eine im Wesentlichen ebene Frontplatte 13, die beispielsweise in die Fahrzeugverkleidung eingelassen ist und bündig oder unter Bildung einer Fuge mit dieser abschließt. Der Rahmen besitzt eine erste Ausdehnung H und eine zweite Ausdehnung B, die mindestens doppelt so groß ist wie die Ausdehnung in Richtung H.

Zentral in dem Rahmen 12 angeordnet ist eine Öffnung 14, die ebenfalls eine rechteckige Form besitzt. Die Öffnung 14 ist durch Kanten begrenzt, die parallel zu den Außenkanten des Rahmens 12 und seiner Abdeckplatte 13 verlaufen. Das Verhältnis der Seitenlängen in der Öffnung 14 zueinander, entspricht ungefähr dem Verhältnis des Rahmens 12 an seinen Außenkanten.

Deutlich zu erkennen in Figur 1 ist die Situation, dass der Rahmen 12 mit seiner Öffnung 14 nicht bündig in der Ebene der Öffnung 14 durch die beiden Klappen 16, 18 abgeschlossen ist. Die Öffnung 14 wird durch zwei Klappen 16, 18 verschlossen, die nach Innen versetzt sind. Jede der Klappen 16, 18 besitzt eine Grundwand 20, zwei Seitenwände 22, 28 entlang der Breite B sowie jeweils eine Rückwand 24, 30. Die Rückwände 24 und 30 bilden einen Abschluss der Öffnung, der gegenüber der Öffnung 14 versetzt ist. Die Wände mit Grundwand und Rückwand treffen jeweils in einem Knick unter einem Winkel von 90° aufeinander, so dass jede Klappe mit ihren beiden Seitenwänden, der Grundwand und der Rückwand vier Seiten eines Quaders bildet. Zwischen Grundwand 20 und Rückwand 24 erstrecken sich mehrere dreieckige Streben 32a, b, c sowie 34a, b, c. Die Stege sind jeweils parallel zueinander angeordnet und jeweils einander gegenüberliegend. Der Abstand zwischen den (freien) Schenkeln an der Stege 32 und 34 verjüngt sich beginnend mit der Öffnung 14 in dem Rahmen 12 hin zu den Rückwänden 24 und 30 der Klappen.

Figur 1 zeigt ferner schematisch dargestellt einen elektrischen Steckverbinder 36, der zusammen mit dem Montagerahmen 12 die Ladebuchse 10 bildet.

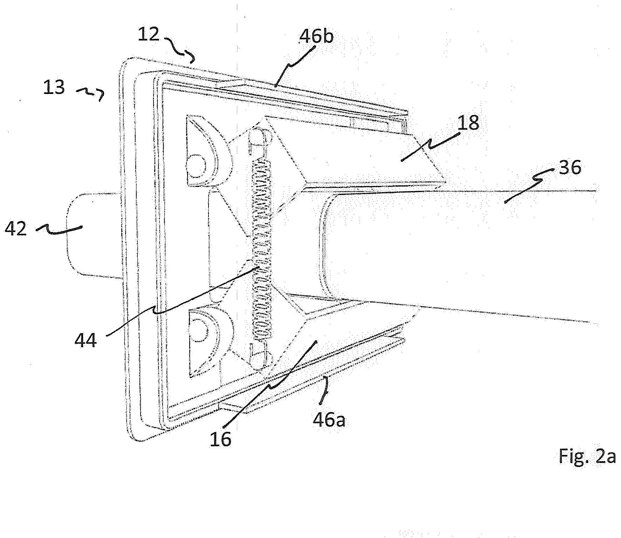

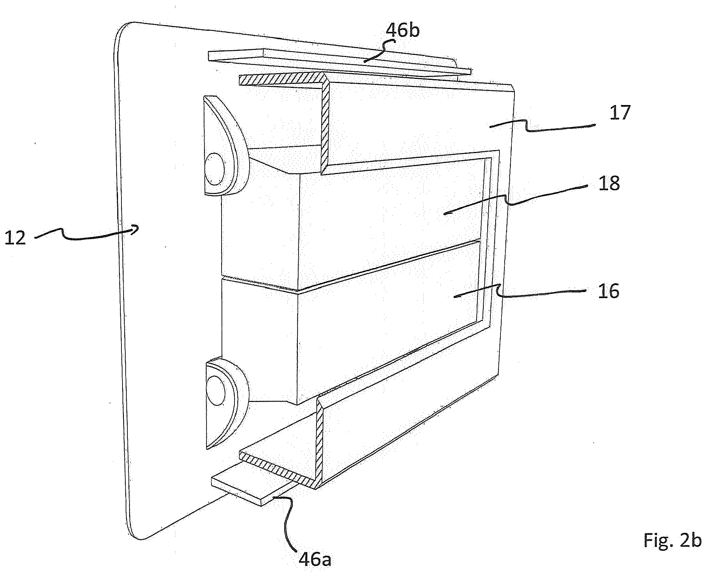

Figur 2 zeigt eine perspektivische Ansicht aus der Sicht des Steckverbinders 36, also aus dem Inneren. Zu erkennen ist der Rahmen 12 mit der Öffnung 14. Eine untere Klappe 16 und die gegenüberliegende Klappe 18 ist in einer teilweise geöffneten Position dargestellt, in der die Klappen verschwenkt sind. Die Klappe 16 ist über eine Schwenkachse 38 an einem unteren Teil des Rahmens 12 angelenkt, während die obere Klappe 18 an einem oberen Teil des Rahmens 12 über eine Schwenkachse 40 angelenkt ist.

Figur 2a zeigt ebenfalls den Aufbau der Klappen im Zusammenhang mit Grundwand und Rückwand. Die untere Klappe 16 besitzt eine im geschlossenen Zustand horizontal verlaufende Grundwand 20 und eine dazu senkrecht stehende Rückwand 24. Beide Wände treffen in einem 90° Winkel aufeinander. Grundsätzlich kann der Winkel (im mathematischen Drehsinn) auch größer sein als der dargestellte 90° Winkel. Ist der Winkel größer als 90°, so weist die Rückwand 16 vom Rahmen fort und nicht auf diesen oder seine Öffnung hin.

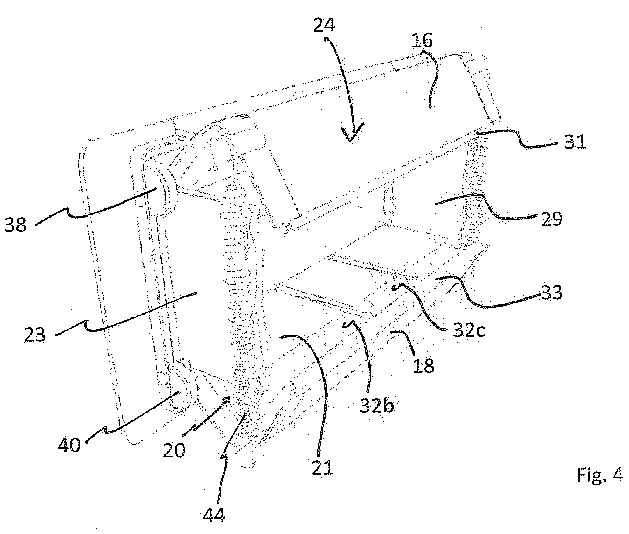

Der Rahmen 12 besitzt auf seiner der Frontplatte 13 gegenüberliegenden Seite einen umlaufenden Vorsprung, mit dem die Ladebuchse 10 beispielsweise in eine Verkleidung des Fahrzeugs eingesetzt werden kann. Zudem sind an dem sich in Richtung der Breite B erstreckende Kante des Rahmens, Rastvorsprünge 46a, 46b vorgesehen, mit denen der Rahmen 12 in ein Verkleidungs- oder Karosseriebauteil eingeclipst werden kann. Figur 4 zeigt die Klappen 16 und 18 im geöffneten Zustand. Der Ladestecker 42 ist durch den Rahmen 12 hindurch in die elektrische Steckverbindung 36 eingeführt worden. Deutlich zu erkennen in Figur 4 ist das Federelement 44, das an der Außenwand der Seitenwände 22 und 28 von Klappen 16 bzw. 18 befestigt ist und diese in eine geschlossene Position vorspannt.

Ein besonderer Effekt wird durch die Anordnung der Rückwände 24 und 30 erzielt. Beide Rückwände sind gegenüber der vom Rahmen 12 aufgespannten Ebene der Öffnung 14 nach innen, hin zum elektrischen Steckverbinder 36 versetzt. Nimmt man nun an, dass beispielsweise ein Wasserstrahl oder ein Druckluftstrahl durch die Öffnung 14 auf die Klappen gerichtet wird, so ist eine von dem Wasserstrahl aufgebrachte Hebelkraft deutlich geringer als für eine Rückwand, die direkt an den Schwenkachsen 38 und 40 ansetzt. Die schwerer zu öffnenden Klappen 16 und 18 werden aber für den eingeführten Ladestecker 36 weiterhin ohne erhöhten Kraftaufwand geöffnet, in dem in die Stege 32a, b, c und 34a, b, c mithilfe des Ladesteckers 42 geöffnet werden.

Für den Fall, dass die Ladebuchse 10 Druckwasserstrahl ausgesetzt ist, kann es vorteilhaft sein in den Grundwänden Durchbrechungen vorzusehen, durch die Flüssigkeit abfließen kann, ohne dass sie auf den elektrischen Steckverbinder trifft.

Fig. 2b zeigt einen weiteren möglichen Aufbau der Ladebuchse bei geschlossenen Klappen 16, 18. Dargestellt ist der Rahmen 12, der über seine Rastvorsprünge 46a, 46b montiert werden kann, beispielsweise in einer Ausnehmung der Fahrzeugverkleidung. Als Spritzschutz 17 ist ein weiterer Rahmen vorgesehen, der zur besseren Übersicht in Fig. 2b geschnitten dargestellt ist. Der Rahmen 12 besteht aus einem L-förmigen Profil, das die Klappen 16, 18 gegenüber dem Innenraum verdeckt. Hierbei besitzt der Spritzschutz 17 zwei in einem rechten Winkel zueinander stehende Schenkel, von denen einer parallel zur Grundwand und einer parallel zur Rückwand angeordnet ist. Der Spritzschutz 17 ist so angeordnet, dass die Klappen 16, 18 geöffnet werden können. Je nach Ausgestaltung kann der Spritzschutz 17 beispielsweise noch mit einem Ablauf versehen sein.

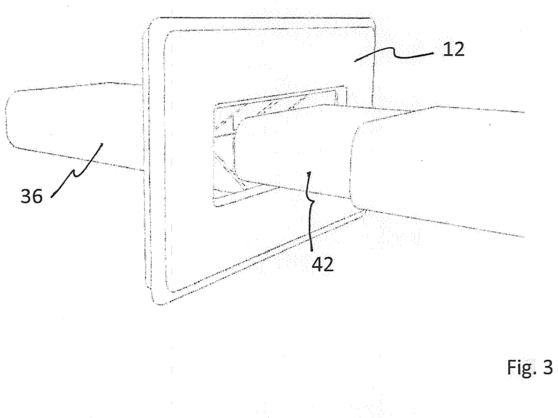

Figur 3 zeigt die Situation, wie ein Ladestecker 42 in die Öffnung 14 des Rahmens 12 eingeführt wird, um mit dem elektrischen Steckverbinder 36 eine elektrisch leitende Verbindung einzugehen. Wenn der Ladestecker 42 in Richtung des elektrischen Steckverbinders 36 vorgeschoben wird, kommt der Ladestecker 42 mit den Stegen 32 und 34 in Kontakt und die Klappen 16 und 18 werden aufgespreizt. Das Aufspreizen erfolgt gegen eine Federkraft eines (vom Rahmen verdeckten) Federelements 44.

Figur 4 zeigt eine Abwandlung der Ladebuchse aus Figur 1 von der Fahrzeuginnenseite, also mit einem Blick auf ihre Rückseite. Es werden gleiche Bezugszeichen für gleiche Bauteile wie bei der ersten Ausführungsform verwendet, abweichende Teile erhalten abweichende Bezugszeichen.

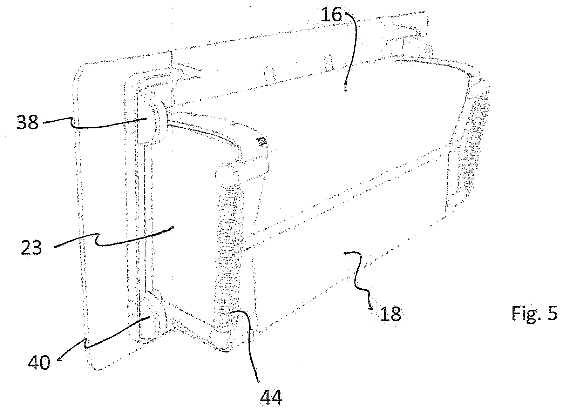

Die Abwandlung in den Figuren 4 und 5 betrifft im Wesentlichen den Aufbau der Klappen 16 und 18. Wie in Figur 4 zu erkennen ist, bestehen die Klappen aus zwei angewinkelten Wänden. Die Klappe 18 besitzt eine Grundwand 20 und eine Rückwand 24. Zwischen Rückwand 24 und Grundwand 20 sind die Stege 32b und 32c zu erkennen. Der Unterschied besteht in einer zusätzlichen Bodenplatte 21, die an die Öffnung 14 anschließt. Die Bodenplatte 21 besitzt Schlitze, passend für die Stege 32. Ein weiterer Unterschied besteht in den Seitenwände 23 und 29. Diese Seitenwände sind nicht mit den Klappen 16 oder 18 verbunden, sondern als Teil des Rahmens geformt. Dementsprechend entfallen die Seitenwände an den Klappen 16 und 18. Ein besonderer Vorteil der Ausführungsvariante aus den Figuren 4 und 5 besteht darin, dass auf die Bodenplatten 21 wirkende Kräfte nicht ein Drehmoment auf die Klappen 16, 18 ausüben und somit nicht zu einem Öffnen der Klappen beitragen. Zudem sind die Klappen 16, 18 mit Dichtungen 31, 33 ausgestattet, die im geschlossenen Zustand für zusätzliche Dichtigkeit sorgen.

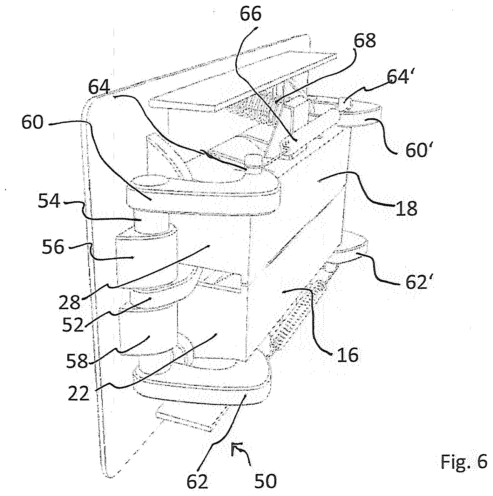

Figur 6 zeigt eine dritte Ausführungsform, die einen Verriegelungsmechanismus 50 besitzt. Der Verriegelungsmechanismus 50 ist an beiden Seiten der Klappen 16 und 18 angeordnet. Der Verriegelungsmechanismus 50 weist einen Entriegelungshebel 52 auf, der zwischen den Seitenwänden 26 und 28 in die Öffnung 14 vorsteht. Der Entriegelungshebel 52 ist drehfest mit einer Welle 54 verbunden. Die Welle 54 ist in zwei Lagerabschnitten 56 und 58 auf der Rückseite des Rahmens 12 angeordnet. Endseitig der Welle 54 sind Entriegelungshaken 60, 62 vorgesehen. Die Entriegelungshaken 60, 62 besitzen an ihrem freien Ende einen Vorsprung 64, der mit einem Federelement 66 verbunden ist. Das andere Ende des Federelements 66 ist mit einem Vorsprung 64` an dem gegenüberliegenden Verriegelungshebel 60' verbunden.

Jede der Klappen 16, 18 besitzt ein vorspannendes Federelement 68, 70, mit dem die Klappen 16, 18 in ihre geschlossene Position vorgespannt sind.

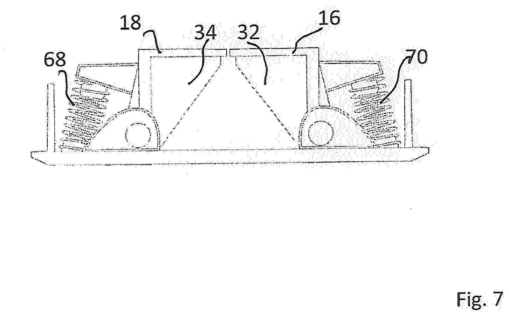

Figur 6 zeigt eine Position der Entriegelungshebel 60, 62, 60', 62', in der das Ende der Entriegelungshebel an der jeweiligen Klappe 16, 18 anliegt. Ein Aufschwenken der Klappe ist nicht möglich und wird durch die Entriegelungshebel blockiert. Durch ein Betätigen des Entriegelungshebels 52 wird die Welle 54 gedreht und die Entriegelungshebel 60, 62, 60', 62` werden gegen die Federkraft 66 aufgespreizt und die Klappen 16, 18 können gegen die Federkraft 68, 70 aufgeschwenkt werden. Der Vorgang des Aufschwenkens erfolgt ebenso wie in den obigen Ausführungsbeispielen 3 über eine Reihe von Stegen, die im Inneren der Klappen 16, 18 angeordnet sind und beispielsweise in Figur 7 zu erkennen sind.

### Bezugszeichenliste

- 10: Ladebuchse
- 12: Montagerahmen
- 13: Frontplatte
- 14: Öffnung
- 16: Klappe
- 17: Spritzschutz
- 18: Klappe
- 20: Grundwand
- 21: Bodenplatte
- 22: Seitenwand
- 23: Seitenwand
- 24: Rückwand
- 28: Seitenwand
- 29: Seitenwand
- 30: Rückwand
- 31: Dichtung
- 32a: Steg
- 32b: Steg
- 32c: Steg
- 33: Dichtung
- 34a: Steg
- 34b: Steg
- 34c: Steg
- 36: Steckverbinder
- 38: Schwenkachse
- 40: Schwenkachse
- 42: Ladestecker
- 44: Federelement
- 46a: Rastvorsprung
- 46b: Rastvorsprung
- 50: Verriegelungsmechanismus
- 52: Entriegelungshebel
- 54: Welle
- 56: Lagerabschnitt
- 58: Lagerabschnitt
- 60: Entriegelungshaken
- 60`: Entriegelungshaken
- 62: Entriegelungshaken
- 62`: Entriegelungshaken
- 64: Vorsprung
- 64`: Vorsprung
- 66: Federelement
- 68: Federkraft
- 70: Federkraft

## Patentansprüche

1. Ladebuchse (10) mit einem elektrischen Steckverbinder (36) für einen Ladestecker (42), die einen Rahmen (12) mit einer Öffnung (14) zu dem elektrischen Steckverbinder (36) und ein Paar von schwenkbar an parallel zu einander verlaufenden Schwenkachsen (38, 40) angeordneten Klappen (16, 18) aufweist, wobei mindestens ein Federelement (44) die Klappen (16, 18) in eine geschlossene Position vorspannt, **dadurch gekennzeichnet, dass** jede Klappe (16, 18) eine an dem Rahmen (12) mit der Öffnung (14) angelenkte Grundwand (20) und eine Rückwand (24, 30) aufweist, wobei die Rückwände (24, 30) gegenüber einer gedachten Ebene der Öffnung (14) im Rahmen (12) in Richtung des elektrischen Steckverbinders versetzt sind, wobei jede Klappe einen parallel zu der Schwenkachse (38, 40) verlaufenden Knick zwischen der Grundwand (20) und der Rückwand (24, 30) besitzt.

2. Ladebuchse nach Anspruch 1, **dadurch gekennzeichnet, dass** der Knick zwischen Grundwand (20) und jeweiliger Rückwand (24, 30) einen rechten oder einen stumpfen Winkel einschließt.

3. Ladebuchse (10) nach Anspruch 1 oder 2, **dadurch gekennzeichnet, dass** mindestens ein Federelement an beiden Klappen (16, 18) angebracht ist und diese in ihre geschlossene Stellung vorspannt.

4. Ladebuchse (10) nach einem der Ansprüche 1 bis 3, **dadurch gekennzeichnet, dass** mindestens ein Federelement senkrecht zur Schwenkachse (38, 40) steht.

5. Ladebuchse (10) nach einem der Ansprüche 1 bis 4, **dadurch gekennzeichnet, dass** die Rückwand (24, 30) im Wesentlichen parallel zu dem mindestens einen Federelement verläuft.

6. Ladebuchse (10) nach Anspruch 5, **dadurch gekennzeichnet, dass** die Grundwand (20) sich von der Schwenkachse (38, 40) zu der Rückwand (24, 30) erstreckt.

7. Ladebuchse (10) nach Anspruch 6, **dadurch gekennzeichnet, dass** mindestens eine der Grundwände (20) eine oder mehrere Durchbrechungen aufweist.

8. Ladebuchse (10) nach Anspruch 6 oder 7, **dadurch gekennzeichnet, dass** jede Klappe (16, 18) mindestens einen Steg (32a, 32b, 32c, 34a, 34b, 34c) aufweist, der sich von der Schwenkachse (38, 40) ausgehend in Richtung Rückwand (24, 30) erstreckt, wobei der Abstand zwischen gegenüberliegenden Stegen (32a, 32b, 32c, 34a, 34b, 34c) der beiden Klappen (16, 18) hin zu der Rückwand (24, 30) sich verjüngt.

9. Ladebuchse (10) nach einem der Ansprüche 1 bis 8, **dadurch gekennzeichnet, dass** der Rahmen (12) eine rechteckige Öffnung (14) umgibt, die durch die beiden Klappen (16, 18) verschlossen wird.

10. Ladebuchse (10) nach Anspruch 7, **dadurch gekennzeichnet, dass** die rechteckige Öffnung (14) sich mehr als doppelt so viel in eine erste Richtung erstreckt wie in eine zweite Richtung.

11. Ladebuchse (10) nach Anspruch 10, **dadurch gekennzeichnet, dass** die Schwenkachsen (38, 40) sich jeweils in die erste Richtung erstrecken.

12. Ladebuchse (10) nach einem der vorhergehenden Ansprüche, **dadurch gekennzeichnet, dass** ein Verriegelungsmechanismus für die beiden Klappen (16, 18) vorgesehen ist, der einen oder mehrere auch bei geschlossener Position der beiden Klappen (16, 18) zugängliche mehrere Entriegelungshebel (52) aufweist, wobei die Klappen (16, 18) in der geschlossenen Position verriegelt sind bis der oder die Entriegelungshebel (52) betätigt wurde.

13. Ladebuchse nach Anspruch 12, **dadurch gekennzeichnet, dass** der oder die Entriegelungshebel (52) über eine Welle (54) mindestens einen Sperrhaken (60, 62) gegen eine Federkraft (66) aus einer die Klappen (16, 18) sperrenden Position verschwenkt.

## Claims

1. A charging socket (10) with an electrical plug connector (36) for a charging plug (42), the charging socket having a frame (12) with an opening (14) for the electrical plug connector (36) and a pair of flaps (16, 18) which are pivotably arranged on pivot pins (38, 40) running parallel to one another, wherein at least one spring element (44) pretensions the flaps (16, 18) into a closed position, **characterized in that** each flap (16, 18) has a bottom wall (20), which is articulated to the frame (12) with the opening (14), and a rear wall (24, 30), wherein the rear walls (24, 30) are offset relative to an imaginary plane of the opening (14) in the frame (12) in the direction of the electrical plug connector, wherein each flap has a sharp bend which is located between the bottom wall (20) and the rear wall (24, 30) and which runs parallel to the pivot pin (38, 40).

2. The charging socket according to claim 1, **characterized in that** the sharp bend between the bottom wall (20) and the respective rear wall (24, 30) encloses a right angle or an obtuse angle.

3. The charging socket (10) according to claim 1 or 2, **characterized in that** at least one spring element is attached to the two flaps (16, 18) and pretensions these flaps into their closed position.

4. The charging socket (10) according to one of claims 1 to 3, **characterized in that** at least one spring element is located perpendicular to the pivot pin (38, 40) .

5. The charging socket (10) according to one of claims 1 to 4, **characterized in that** the rear wall (24, 30) runs substantially parallel to the at least one spring element.

6. The charging socket (10) according to claim 5, **characterized in that** the bottom wall (20) extends from the pivot pin (38, 40) to the rear wall (24, 30).

7. The charging socket (10) according to claim 6, **characterized in that** at least one of the bottom walls (20) has one or more through-openings.

8. The charging socket (10) according to claim 6 or 7, **characterized in that** each flap (16, 18) has at least one web (32a, 32b, 32c, 34a, 34b, 34c) which extends from the pivot pin (38, 40) in the direction of the rear wall (24, 30), wherein the spacing between opposing webs (32a, 32b, 32c, 34a, 34b, 34c) of the two flaps (16, 18) tapers toward the rear wall (24, 30) .

9. The charging socket (10) according to one of claims 1 to 8, **characterized in that** the frame (12) surrounds a rectangular opening (14) which is closed by the two flaps (16, 18).

10. The charging socket (10) according to claim 7, **characterized in that** the rectangular opening (14) extends more than twice as far in a first direction than in a second direction.

11. The charging socket (10) according to claim 10, **characterized in that** the pivot pins (38, 40) extend in each case in the first direction.

12. The charging socket (10) according to one of the preceding claims, **characterized in that** a locking mechanism is provided for the two flaps (16, 18), the locking mechanism having one or more unlocking levers (52) which are also accessible in the closed position of the two flaps (16, 18), wherein the flaps (16, 18) are locked in the closed position until the unlocking lever(s) (52) has or have been actuated.

13. The charging socket according to claim 12, **characterized in that** the unlocking lever(s) (52) pivots or pivot at least one locking hook (60, 62) via a shaft (54) counter to a spring force (66) out of a position locking the flaps (16, 18).

## Revendications

1. Prise de charge (10) avec un connecteur électrique femelle (36) pour un connecteur de charge (42), lequel présente un cadre (12) avec une ouverture (14) vers le connecteur électrique femelle (36) et une paire de volets (16, 18) disposés de façon pivotante sur des axes de pivotement (38, 40) s'étendant parallèlement l'un à l'autre, au moins un élément ressort (44) précontraignant les volets (16, 18) dans une position fermée, **caractérisée en ce que** chaque volet (16, 18) présente une paroi de base (20) articulée avec l'ouverture (14) et une paroi arrière (24, 30), les parois arrières (24, 30) étant décalées, dans le cadre (12), dans la direction du connecteur électrique femelle par rapport à un plan imaginé de l'ouverture (14), chaque volet possédant un coude s'étendant parallèlement à l'axe de pivotement (38, 40) entre la paroi de base (20) et la paroi arrière (24, 30).

2. Prise de charge selon la revendication 1, **caractérisée en ce que** le coude entre la paroi de base (20) et la paroi arrière respective (24, 30) comprend un angle droit ou un angle obtus.

3. Prise de charge (10) selon la revendication 1 ou 2, **caractérisée en ce qu'**au moins un élément ressort est monté sur les deux volets (16, 18) et précontraint ceux-ci dans leur position fermée.

4. Prise de charge (10) selon l'une des revendications 1 à 3, **caractérisée en ce qu'**au moins un élément ressort est vertical par rapport à l'axe de pivotement (38, 40).

5. Prise de charge (10) selon l'une des revendications 1 à 4, **caractérisée en ce que** la paroi arrière (24, 30) s'étend de façon essentiellement parallèle à l'au moins un élément ressort.

6. Prise de charge (10) selon la revendication 5, **caractérisée en ce que** la paroi de base (20) s'étend de l'axe de pivotement (38, 40) à la paroi arrière (24, 30).

7. Prise de charge (10) selon la revendication 6, **caractérisée en ce qu'**au moins l'une des parois de base (20) présente une ou plusieurs perforations.

8. Prise de charge (10) selon la revendication 6 ou 7, **caractérisée en ce que** chaque volet (16, 18) présente au moins une nervure (32a, 32b, 32c, 34a, 34b, 34c), laquelle s'étend dans la direction de la paroi arrière (24, 30), à partir de l'axe de pivotement (38, 40), la distance entre les nervures opposées (32a, 32b, 32c, 34a, 34b, 34c) des deux volets (16, 18) se rétrécissant vers la paroi arrière (24, 30).

9. Prise de charge (10) selon l'une des revendications 1 à 8, **caractérisée en ce que** le cadre (12) entoure une ouverture rectangulaire (14), laquelle est fermée par les deux volets (16, 18).

10. Prise de charge (10) selon la revendication 7, **caractérisée en ce que** que l'ouverture rectangulaire (14) s'étend au moins deux fois plus dans une première direction que dans une deuxième direction.

11. Prise de charge (10) selon la revendication 10, **caractérisée en ce que** les axes de pivotement (38, 40) s'étendent respectivement dans la première direction.

12. Prise de charge (10) selon l'une des revendications précédentes, **caractérisée en ce qu'**un mécanisme de verrouillage est prévu pour les deux volets (16, 18), lequel mécanisme présente un ou plusieurs leviers de déverrouillage (52), également accessibles en position fermée des deux volets (16, 18), les volets (16, 18) étant verrouillés dans la position fermée jusqu'à ce que le ou les leviers de déverrouillage (52) aient été actionnés.

13. Prise de charge selon la revendication 12, **caractérisée en ce que** le ou les leviers de déverrouillage (52) font basculer à l'encontre d'une force de ressort (66), par l'intermédiaire d'un arbre (54), au moins un crochet de retenue (60, 62) hors d'une position bloquant les volets (16, 18).
